(19) Europäisches Patentamt
European Patent Office
Office européen des brevets

(11) **EP 4 379 616 A1**

(12) **EUROPEAN PATENT APPLICATION**

(43) Date of publication:
**05.06.2024  Bulletin 2024/23**

(21) Application number: **22461637.5**

(22) Date of filing: **04.12.2022**

(51) International Patent Classification (IPC):
***G06N 10/80*** (2022.01)

(52) Cooperative Patent Classification (CPC):
**G06N 10/80**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Uniwersytet Jagiellonski**
**31-007 Krakow (PL)**

• **Centrum Fizyki Teoretycznej**
**Polskiej Akademii Nauk**
**02-668 Warszawa (PL)**

(72) Inventors:
• **Reardon-Smith, Oliver**
**30-348 Krakow (PL)**
• **Oszmaniec, Michal**
**00-459 Warszawa (PL)**

(74) Representative: **Kancelaria Eupatent.pl Sp. z.o.o**
**Ul. Kilinskiego 185**
**90-348 Lodz (PL)**

(54) **IMPROVED SIMULATION OF QUANTUM CIRCUITS DOMINATED BY FREE FERMIONIC OPERATIONS**

(57)    The present invention relates to the technical field of simulating quantum circuits using a classical computer, in particular to algorithms for simulating quantum circuits dominated by free fermionic operations.

Fig. 1

## Description

### TECHNICAL FIELD

The present invention relates to the technical field of simulating quantum circuits using a classical computer, in particular to algorithms for simulating quantum circuits dominated by free fermionic operations.

### BACKGROUND

As quantum computers progress from experimental apparatus in the lab towards practically applicable tools able to solve real world problems, there will be increasing need to simulate their output on classical computers. Classical computations are essential to verify and validate the output of still noisy and unreliable devices [1], while the intermediate scale of existing and near-future devices means that it is still often feasible to classically simulate their operation. Landmark papers [2, 3] are already using classically computed Born-rule probabilities to assess the capabilities of quantum computers. Moreover, as experimental implementation of quantum computers progresses, so does work on the algorithms that will run on them. In the coming years theorists will have increasing need of classical simulation algorithms to benchmark, develop, and understand quantum, and hybrid quantum-classical algorithms.

In recent years, the development of (quasi-)probabilistic sampling based algorithms [4-6] has led to a significant progress in classical simulations of universal quantum circuits composed of "free" Clifford gates complemented with "resourceful" T gates. These algorithms exploit decompositions of T gates to ensure that the cost of classical simulation (e.g., in terms of seconds of CPU time) scales directly with the amount of the "magic" resource present in the circuit.

A US patent US10565514 discloses a method for emulating a quantum computer, comprising generating a first pair of phase-coherent signals representing an initial quantum state of one or more qubits, the signals corresponding to real and imaginary parts of a complex signal, respectively; providing the first pair of signals as inputs to a first gate component that has been programmed to perform a given quantum computing operation; performing, by analog electronic circuits within the first gate component, the given quantum computing operation on the first pair of signals to produce a second pair of signals, the second pair of signals representing a transformed quantum state of at least one of the one or more qubits; providing an output of the first gate component to a measurement component; and producing, by the measurement component, a digital representation of a result of the given quantum computing operation corresponding to the output of the first gate component. The simulation cost of such a method scales with the number of qubits.

### SUMMARY OF THE INVENTION

There is a need for improvements in methods related to simulating quantum circuits using a classical computer, in particular for quantum circuits consisting of a large number of qubits and a large number of gates.

The present invention relates to a classical simulation algorithm of universal quantum circuits composed of free matchgates, or Fermionic-linear-optical (FLO) gates, and resourceful non-Gaussian gates. The present invention uses the efficiently simulable FLO subtheory to universal quantum computation by employing the gadgetization of Refs.[14] and [13] which allows the addition of controlled phase gates with arbitrary phases.

The object of the present invention is a novel phase-sensitive algorithm for simulation of FLO circuits. It allows one to decompose the states arising from gadgetization at the level of statevectors rather than density matrices.

A suite of classical algorithms according to the present invention is able to estimate, to additive error, a Born-rule probability of a quantum circuit formed of Fermionic linear optical (FLO) unitaries (for definitions see, for example, Refs. [7-10]), and non-FLO controlled phase gates. The estimation algorithm according to the invention has polynomial (in fact at most cubic) run-time in all relevant parameters, other than an exponential dependence on the number of controlled phase gates (of each fixed phase), which arises because of a linear dependence in a quantity that is herein called the "FLO-extent" in analogy with the stabilizer extent of Ref. [4].

The results of the present invention can be directly compared to the algorithm of Ref. [11]. The primary advantage according to the present invention over that work is the dramatically improved runtime-scaling of the algorithm according to the invention. Ignoring polynomial factors, for a circuit containing only 10 swap gates or CZ gates, the algorithm presented herein is expected to perform $4.5^{10} \approx 3.4 \times 10^6$ times faster.

It is noted herein that the upper bound on the runtime may be substantially improved by adapting the estimate algorithm of Ref. [5]. It is not a coincidence that the expressions obtained for the runtime of the algorithm according to the present invention appear to be very similar to those obtained for Clifford+T circuits in Ref. [5]. These methods may be further investigated for application to other efficiently classically simulable subtheories of quantum mechanics. The algorithm according to the present invention is based on a novel phase-sensitive classical simulation method for the FLO subtheory, similar to the CH-form developed in Ref. [4] for the Clifford subtheory. The CH-form was initially used to create a heuristic sampling algorithm, and the FLO normal form as presented herein may be used in exactly the same way, allowing (approximate) sampling from, rather than estimation of, the Born rule probability distribution.

The present invention is applicable in the increasingly important work of characterizing, verifying and validating the output of quantum computers. In particular, the algorithms for the estimation of output probabilities can be directly used for certification (via an analogue of cross-entropy benchmarking utilized in [2]) of recently introduced quantum advantage scheme [12] in which FLO circuits are initialized by a tensor product of magic states.

The present invention is therefore applicable to classical simulations of weakly interacting Fermions, with applications in condensed matter and quantum chemistry research.

These and other features, aspects and advantages of the invention will become better understood with reference to the following drawings, descriptions and claims.

## BRIEF DESCRIPTION OF FIGURES

The present invention is shown by means of example embodiments on a drawing, wherein:

Fig. 1 presents an example of a quantum circuit consisting of free fermionic operations and controlled-phase gates which can be simulated by means of the algorithm presented herein;
Fig. 2 presents a comparison of the runtime cost of adding non-FLO controlled phase to a quantum circuit for the simulation method according to the present invention and the algorithm of Ref. [11];
Figs. 3a and 3b present the gadget defined in Ref. [13], specialized for the case where the 0 outcome is observed in every measurement;
Fig. 4 presents a flowchart of a first embodiment of a probability estimation algorithm according to the invention;
Fig. 5 presents a flowchart of a second embodiment of a probability estimation algorithm according to the invention;
Fig. 6 presents a gadget associated with the first embodiment of the probability estimation algorithm;
Fig. 7 presents a gadget associated with the second embodiment of the probability estimation algorithm;
Fig. 8 presents a structure of a classical computer which can implement the algorithm presented herein.

## DETAILED DESCRIPTION

The following detailed description is of the best currently contemplated modes of carrying out the invention. The description is not to be taken in a limiting sense, but is made merely for the purpose of illustrating the general principles of the invention.

### Example of a quantum circuit to be simulated

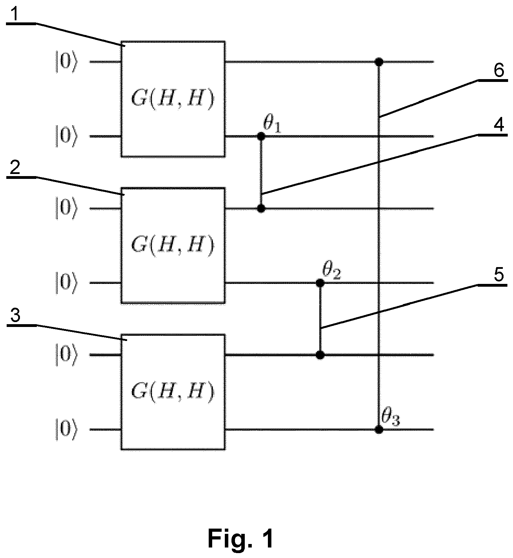

Fig. 1 presents an example of a quantum circuit consisting of free fermionic operations and controlled-phase gates which can be simulated by means of the algorithm presented herein. The example quantum circuit consists of three Fermionic linear optical unitaries, the G(H,H) gates 1, 2, 3, and three non-FLO controlled phase gates 4, 5, 6. Each G(H,H) gate 1, 2, 3 produces a maximally entangled Bell state and the three individual Bell states 4, 5, 6 are then "connected" by applying-controlled phase gates.

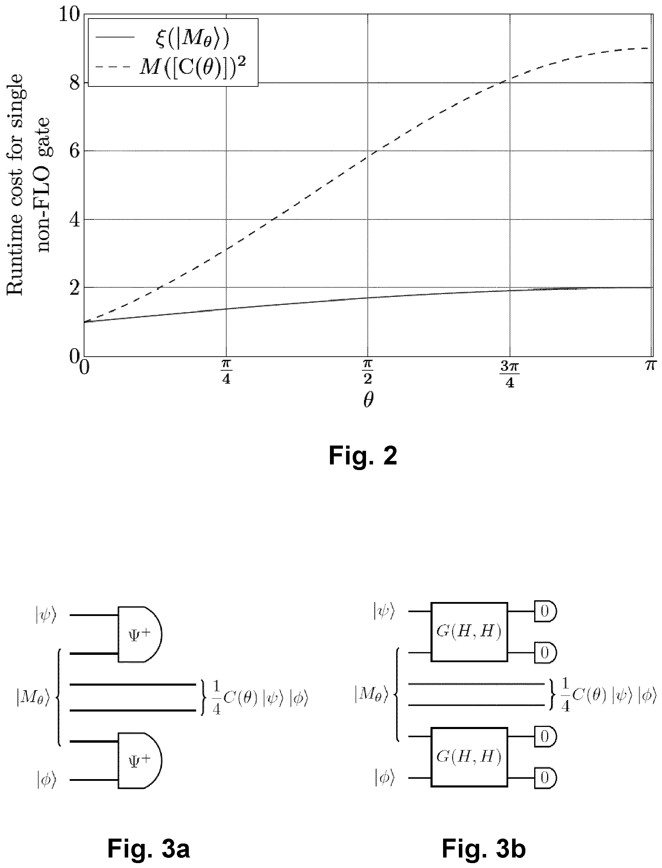

Fig. 2 presents a comparison of the runtime cost of adding non-FLO controlled phase to a quantum circuit for the simulation method according to the present invention, and the algorithm of Ref. [11]. The notation $M([C(\theta)])$ indicates the Fermionic nonlinearity defined in that paper, computed for the channel $[C(\theta)] : \rho \rightarrow C(\theta) \rho C(\theta)^\dagger$. The runtime obtained by the authors of Ref. [11] increases by a factor $M([C(\theta)])^2$ for each controlled-phase gate added, while the runtime according to the present invention increases by a factor of $\xi(|M\theta\rangle)$. A minor difference of notation is noted, the controlled phase gates considered herein are equivalent to the Erot gates of Ref. [11] with the phase divided by 4.

### Framework and notation

In the following description, the notation of Ref. [7] will be used. The state-space is that of $n$ qubits, on this $n$ operators $a_j$ are defined satisfying the canonical anticommutation relations for $i, j \in \{0, 1, \dots, n - 1\}$

$$\{a_i, a_j\} = 0 \qquad\qquad (1)$$

$$\{a_i^\dagger, a_j^\dagger\} = 0 \qquad\qquad (2)$$

$$\{a_i, a_j^\dagger\} = \delta_{ij} I. \tag{3}$$

It is also required that the $a_i$ and $a_i^\dagger$ act on the computational basis as

$$a_i^\dagger \left| x_0, \ldots x_i, \ldots x_{n-1} \right\rangle = \delta_{x_i,1} (-1)^{\sum_{m=0}^{i-1} x_i} \left| x_0, \ldots \overline{x}_i, \ldots x_{n-1} \right\rangle \tag{4}$$

$$a_i \left| x_0, \ldots x_i, \ldots x_{n-1} \right\rangle = \delta_{x_i,0} (-1)^{\sum_{m=0}^{i-1} x_i} \left| x_0, \ldots \overline{x}_i, \ldots x_{n-1} \right\rangle. \tag{5}$$

A Fermionic linear optical (FLO) unitary is a unitary generated by any Hamiltonian which is a real linear combination of the following 3n terms

$$H_1 = a_i^\dagger a_i \tag{6}$$

$$H_2 = a_{i+1}^\dagger a_{i+1} \tag{7}$$

$$H_3 = a_i^\dagger a_{i+1} - a_i a_{i+1}^\dagger \tag{8}$$

$$H_4 = i \left( a_i^\dagger a_{i+1} + a_i a_{i+1}^\dagger \right) \tag{9}$$

$$H_5 = a_i^\dagger a_{i+1}^\dagger - a_i a_{i+1} \tag{10}$$

$$H_6 = i \left( a_i^\dagger a_{i+1}^\dagger + a_i a_{i+1} \right) \tag{11}$$

Following Ref. [7] following 2n "Majorana Fermion operators" are defined:

$$c_{2i} = a_i + a_i^\dagger \tag{12}$$

$$c_{2i+1} = -i \left( a_i - a_i^\dagger \right) \tag{13}$$

for $i \in \{0, 1, \ldots, n - 1\}$. Note that the factors of $i$ appearing outside subscripts in equations 9, 11 and 13 instead represent the imaginary unit.

It shall be noted that the Majorana operators satisfy the relations

$$\{c_i, c_j\} = 2\delta_{ij} I \tag{14}$$

for all $i, j \in \{0, 1, \ldots, In - 1\}$. The creation, annihilation and Majorana operators can be written explicitly in terms of Pauli operators. If for a Pauli operator P E {I,X,Y, Z}, Pj denotes that operator applied to qubit $j$ with implicit identity operators on every other qubit then for $j = 1 \ldots n$

$$a_j^\dagger = \left(\prod_{k=1}^{j-1} Z_k\right) \frac{X_j + iY_j}{2}, \qquad a_j = \left(\prod_{k=1}^{j-1} Z_k\right) \frac{X_j - iY_j}{2} \qquad (15)$$

$$c_{2j-1} = \left(\prod_{k=1}^{j-1} Z_k\right) X_j, \qquad c_{2j} = \left(\prod_{k=1}^{j-1} Z_k\right) Y_j. \qquad (16)$$

A completely arbitrary FLO Hamiltonian has the form

$$H = \sum_{ij} \alpha_{ij} c_i c_j, \qquad (17)$$

where the imaginary part of $\alpha$ is symmetric. Employing $c_i^2 = 2I$ the diagonal entries can be extracted, and employing $\{c_i, c_j\} = 0$ for $i \neq j$ any symmetric matrix with zero-diagonal can be added to $\alpha$ without changing the Hamiltonian.
It is conventional to use these degrees of freedom to write

$$H = aI - \frac{i}{4} \sum_{i \neq j} \alpha_{ij} c_i c_j, \qquad (18)$$

where $\alpha$ is real and antisymmetric and $a$ is a real constant. Although it is necessary to carefully keep track of phases the global phase introduced by the term proportional to the identity is not relevant, and so henceforth FLO Hamiltonians can be identified with real, antisymmetric matrices. An arbitrary FLO unitary is therefore of the form

$$U = \exp\left(\frac{1}{4} \sum_{ij} \alpha_{ij} c_i c_j\right), \qquad (19)$$

for a real, antisymmetric $2n \times 2n$ matrix $\alpha$. The FLO unitaries form a group which is (isomorphic to) the well known spin group, Spin(2n) [10]. In Ref. [7] it is shown that FLO unitaries act on the Majorana operators as

$$U c_i U^\dagger = \sum_j \phi(U)_{ij} c_j, \qquad (20)$$

where $\phi$ : FLO(2n) $\rightarrow$ SO(2n,R). Here, in a slight abuse of notation, by SO(2n,R) is denoted not the abstract special orthogonal group, but the explicit group of $2n \times 2n$ real, special orthogonal matrices so it makes sense to consider the real numbers $\phi(U)_{ij}$. In fact, given a FLO Hamiltonian generating the FLO unitary U this map can be made rather explicit

$$\phi\left(\exp\left(\frac{1}{4} \sum_{ij} \alpha_{ij} c_i c_j\right)\right) = \exp(\alpha). \qquad (21)$$

While $\phi$ is surjective it is not injective, it is an easy exercise to show that it is a group homomorphism and its kernel consists of two operators ker($\phi$) = {$I, -I$} and that the map $\phi$ is a double covering map of SO(2n). In fact this double cover is also the *universal cover*. Equation (21) suggests that the factor ¼ appearing in equations (18) and (19) is not arbitrary, indeed this follows from the relation

$$\left[\frac{1}{4}\sum_{ij}\alpha_{ij}c_ic_j, \frac{1}{4}\sum_{mn}\beta_{mn}c_mc_m\right] = \frac{1}{4}\sum_{ij}[\alpha,\beta]_{ij}c_ic_j, \qquad (22)$$

which easily follows from the Majorana anti-commutation relations (14), and demonstrates that the linear map

$$\Phi : \frac{1}{4}\sum_{ij}\alpha_{ij}c_ic_j \mapsto \alpha, \qquad (23)$$

is a Lie algebra homomorphism. In fact $\Phi$ is bijective and a Lie algebra isomorphism.

**Matchgate decomposition of matchgate magic** states

A necessary and sufficient condition for a Fermionic (e.g. even parity) state to be Gaussian (and therefore live in the FLO efficiently simulable subtheory) is given by the following equation, obtained in Ref. [15]

$$|\psi\rangle \in \text{FLO} \iff \sum_i c_i \otimes c_i |\psi\rangle \otimes |\psi\rangle = 0, \qquad (24)$$

a class of "magic" states, which when used in an appropriate gadget promote FLO circuits to universality was obtained in Ref. [13],

$$|M_\phi\rangle = \frac{1}{2}\left(|0000\rangle + |0011\rangle + |1100\rangle + e^{i\phi}|1111\rangle\right). \qquad (25)$$

It is useful, therefore to find decompositions

$$|M_\phi\rangle = \sum_j a_j |x_j\rangle, \qquad (26)$$

where the $|x_j\rangle$ are Fermionic Gaussian states, i.e. $P_i c_i \otimes c_i |x_j\rangle \otimes |x_j\rangle = 0$. The run-time of the present simulation algorithms scales with the matchgate extent, defined as

$$\xi(|\psi\rangle) = \inf_{a,\{|\gamma_i\rangle\}}\left\{\|a\|_1^2 \;\middle|\; \sum_i a_i |\gamma_i\rangle = |\psi\rangle\right\}, \qquad (27)$$

where the $|\gamma_i\rangle$ are Fermionic Gaussian states.
A special case of Equation (24) is

$$x_0|0000\rangle + x_1|0011\rangle + x_2|1100\rangle + x_3|1111\rangle \in \text{FLO} \iff x_0x_3 = x_1x_2 \iff \begin{vmatrix} x_0 & x_1 \\ x_2 & x_3 \end{vmatrix} = 0, \qquad (28)$$

easy examples satisfying this are each of the computational basis states in $\{|0000\rangle, |0011\rangle, |1100\rangle, |1111\rangle\}$, a product of an arbitrary even state on the first two qubits and an arbitrary even state on the second two qubits. Two useful families of states of the latter kind is

$$|A(\phi)\rangle = \frac{1}{2}\left(e^{-i\frac{\phi}{4}}|0000\rangle + e^{i\frac{\phi}{4}}|0011\rangle + e^{i\frac{\phi}{4}}|1100\rangle + e^{i\frac{3\phi}{4}}|1111\rangle\right) \qquad (29)$$

$$|B(\phi)\rangle = \frac{1}{2}\left(e^{-i\frac{\phi}{4}}|0000\rangle - e^{i\frac{\phi}{4}}|0011\rangle - e^{i\frac{\phi}{4}}|1100\rangle + e^{i\frac{3\phi}{4}}|1111\rangle\right) \qquad (30)$$

The decompositions are noted as

$$|M_\phi\rangle = \cos\left(\frac{\phi}{4}\right)|A(\phi)\rangle + i\sin\left(\frac{\phi}{4}\right)|B(\phi)\rangle \qquad (31)$$

The two vectors in the decomposition in equation (31) for each fixed $\phi$ are orthogonal. This decomposition gives an upper bound on the stabilizer extent

$$\xi(|M_\phi\rangle) \leq \left(\left|\cos\left(\frac{\phi}{4}\right)\right| + \left|\sin\left(\frac{\phi}{4}\right)\right|\right)^2 = 1 + \left|\sin\left(\frac{\phi}{2}\right)\right| \qquad (32)$$

taking its maximum value of 2 where $\phi = \pi$. It is interesting to compare this with the results of Ref. [11]. The authors of Ref. [11] do not provide an explicit form for the "Fermionic nonlinearity" they obtain with their decomposition, but comparing with Ref. [16] it is easy to verify that in fact they obtain

$$M(\mathcal{E}_{\mathrm{rot}}) = 1 + 4|\cos(\theta)\sin(\theta)| = 1 + 2|\sin(2\theta)|, \qquad (33)$$

where

$$\mathcal{E}_{\mathrm{rot}} : \rho \mapsto \exp\left(i\theta\, Z \otimes Z\right)\rho\exp\left(i\theta\, Z \otimes Z\right)^\dagger. \qquad (34)$$

It is noted that an $\varepsilon_{rot}$ with an angle of $\theta$ is matchgate equivalent to a controlled phase gate C($\phi$) gate with $\phi = 4\theta$, since the algorithm provided in Ref. [11] scales with the *square* of the Fermionic-nonlinearity, while the algorithm presented herein scales linearly with the extent, therefore the algorithm presented herein exhibits a substantial advantage over the best prior art.

**Phase sensitive FLO simulator**

The inventors of the present invention have developed a theorem which provides a form to store a FLO state which is efficient, phase-sensitive, and may be updated efficiently when FLO operations are applied. For simplicity in this section it is assumed that $n$, the number of qubits in a system, is even. Of course this does not impose any fundamental problem, an extra qubit can be added to make the number of qubits even, and in any case the results may be generalized to the odd dimensional case without significant difficulty.

Theorem 1 (FLO CH-form).

A general FLO state $|\psi\rangle$ may be written in the form

$$|\psi\rangle = wK\prod_i\left(\cos(\lambda_i)I + \sin(\lambda_i)a_{2i}^\dagger a_{2i+1}^\dagger\right)|0\rangle, \qquad (35)$$

where w is a complex number, *K* is a FLO unitary such that *K* 10) = 10) and the $\lambda_i$ are real numbers.

**Explicit representation and update rules**

This chapter will explain how FLO states are stored on a classical computer. First a lemma is provided which allows one to represent a K type FLO unitary efficiently.

Lemma 1 (Finding the phase of a K-type unitary). *Given a FLO unitary K $\in$ K in the format:*

$$K = \exp\left(\tfrac{1}{4} \sum_{ij} \alpha_{ij} c_i c_j\right)$$

*there is a polynomial time procedure to obtain the complex number $\langle 0|K|0\rangle$.*

Definition 1. *To a state of the form given in theorem 1*

$$|\psi\rangle = wK \prod_i \left(\cos(\lambda_i)I + \sin(\lambda_i)a_{2i}^\dagger a_{2i+1}^\dagger\right)|0\rangle, \tag{36}$$

*there is associated the tuple*

$$\Gamma = (w, a, R, \lambda), \tag{37}$$

*where*

$$Kc_iK^\dagger = \sum_j R_{ij} c_j \tag{38}$$

$$\langle 0| K |0\rangle = a \tag{39}$$

$$\lambda = (\lambda_0, \lambda_1 \ldots \lambda_n). \tag{40}$$

*Such $\Gamma$ uniquely defines a FLO state, but of course multiple tuples may define the same state.*

Of course a simulation algorithm is more than a way to represent states, there are also required rules to update the FLO state when there applied FLO unitaries, projectors and to obtain probabilities of measurement outcomes.

First it will be shown how to update a FLO state by applying a unitary from K.

Lemma 2 (Composing K-type unitaries). *Given data (R, a) and (S, b) such that*

$$K_1 c_i K_1^\dagger = \sum_j R_{ij} c_j, \qquad\qquad \langle 0| K_1 |0\rangle = a \tag{41}$$

$$K_2 c_i K_2^\dagger = \sum_j S_{ij} c_j, \qquad\qquad \langle 0| K_2 |0\rangle = b, \tag{42}$$

*the product $K_1K_2$ is described by the data (RS, ab).*

An auxiliary lemma is required before non K-type FLO unitaries can be applied.

Lemma 3. *If x is a binary vector of even Hamming weight, K $\in$ K and A $\in$ A, there is an O(n³) time algorithm to compute the complex number*

$$\langle 0| c[x]KA |0\rangle. \tag{43}$$

It shall be noted that if *x* has odd Hamming weight, the complex number is zero, since FLO operations are parity preserving.

Lemma 4. *If x andy are binary vectors of even Hamming weight, K1 and K2 are K-type FLO unitaries and A is a A-type FLO unitary then there is an O(n³) algorithm to compute the complex number*

$$\langle 0 | \, c \, [x] K_1 c \, [y] K_2 A \, | 0 \rangle . \qquad (44)$$

Lemma 5. *Given the data $\Gamma$ defining a FLO state $|\phi\rangle$ and a FLO unitary U of the form*

$$U = \exp \left( \mu c_i c_j \right), \qquad (45)$$

*where i < j, there is a polynomial time algorithm to obtain data $\Gamma$' defining the state U $|\phi\rangle$.*

**Applying projectors**

Given a FLO state of the form

$$K A \, | 0 \rangle , \qquad (46)$$

where K 10) = 10) and

$$A = \exp \left( \sum_j \lambda_j c_{4j} c_{4j+2} \right) \qquad (47)$$

the projector $P_i = a_i a_i^\dagger$ is to be applied.

First, there is needed an update rule of the form

$$K^\dagger a_i K = \sum_j T_{ij} a_j , \qquad (48)$$

this is easily obtained from

$$K^\dagger c_i K = \sum_j R_{ij} c_j \qquad (49)$$

$$a_i = \frac{1}{2} \left( c_{2i} + i c_{2i+1} \right), \qquad (50)$$

and looks like

$$K^\dagger a_i K = \frac{1}{2} K^\dagger c_{2i} K + \frac{i}{2} K^\dagger c_{2i+1} K \tag{51}$$

$$= \frac{1}{2} \sum_j \left( R_{2i,j} + i R_{2i+1,j} \right) c_j \tag{52}$$

$$= \frac{1}{2} \sum_j \left( R_{2i,2j} + i R_{2i+1,2j} \right) c_{2j} + \left( R_{2i,2j+1} + i R_{2i+1,2j+1} \right) c_{2j+1} \tag{53}$$

$$= \frac{1}{2} \sum_j \left( R_{2i,2j} + i R_{2i+1,2j} \right) \left( a_j + a_j^\dagger \right) + \left( R_{2i,2j+1} + i R_{2i+1,2j+1} \right) (-i)(a_j - a_j^\dagger) \tag{54}$$

$$= \frac{1}{2} \sum_j \left( R_{2i,2j} + R_{2i+1,2j+1} + i R_{2i+1,2j} - i R_{2i,2j+1} \right) a_j. \tag{55}$$

It shall be noted here that there is no $a^\dagger_j$ *component* in the sum exactly because $K$ is zero-preserving. Of course

$$K^\dagger a_i^\dagger K = \left( K^\dagger a_i K \right)^\dagger \tag{56}$$

$$= \frac{1}{2} \sum_j \left( R_{2i,2j} + R_{2i+1,2j+1} - i R_{2i+1,2j} + i R_{2i,2j+1} \right) a_j^\dagger. \tag{57}$$

Compressing the notation slightly results in

$$a_i a_i^\dagger K A \left| 0 \right\rangle = K K^\dagger a_i a_i^\dagger K A \left| 0 \right\rangle \tag{58}$$

$$= K \left( \sum_j x_j a_j \right) \left( \sum_j x_j^* a_j^\dagger \right) A \left| 0 \right\rangle, \tag{59}$$

and $\Sigma_j x_j a_j$ and $\Sigma_j x_j^* a^\dagger_j$ need to be moved through the unitary $A$. Using similar reasoning to above and the explicit form

$$A = \prod_j \left( \cos \lambda_j I + \sin \lambda_j c_{4j} c_{4j+2} \right), \tag{60}$$

it is easy to find S and $T$ such that

$$A^\dagger a_i A = \sum_j S_{ij} a_j + T_{ij} a_j^\dagger \tag{61}$$

$$A^\dagger a_i^\dagger A = \sum_j S_{ij}^* a_j^\dagger + T_{ij}^* a_j. \tag{62}$$

Since $A$ is not zero-preserving, there are $a^\dagger_j$ components in the expression for $A^\dagger a_i A$ and vice-versa, however noting that $a_i \left| 0 \right\rangle = \left| 0 \right\rangle$ the following is obtained:

$$a_i a_i^\dagger K A \left|0\right\rangle = K A \sum_j \left(s_j a_j + t_j a_j^\dagger\right) \sum_k u_k a_k^\dagger \left|0\right\rangle, \tag{63}$$

recalling the anti-commutation relations for the creation and annihilation operators this becomes

$$a_i a_i^\dagger K A \left|0\right\rangle = K A \left(\sum_j s_j u_j I + \sum_{jk} t_j u_k a_j^\dagger a_k^\dagger\right) \left|0\right\rangle \tag{64}$$

$$= K A \left(\sum_j s_j u_j I + \sum_{jk} t_j u_k a_j^\dagger a_k^\dagger\right) \left|0\right\rangle. \tag{65}$$

For any real vector v the anti-commutation relations imply

$$\sum_{jk} v_j v_k a_j^\dagger a_k^\dagger = 0, \tag{66}$$

so defining

$$t' = t - \frac{(t \cdot u)}{u \cdot u} u, \tag{67}$$

so that $t' \cdot u = 0$, the following is obtained:

$$a_i a_i^\dagger K A \left|0\right\rangle = K A \left(\sum_j s_j u_j I + \sum_{jk} t_j u_k a_j^\dagger a_k^\dagger\right) \left|0\right\rangle \tag{68}$$

$$= K A \left(\sum_j s_j u_j I + \sum_{jk} t'_j u_k a_j^\dagger a_k^\dagger\right) \left|0\right\rangle. \tag{69}$$

Since $t'$ and $u$ are orthogonal, it is possible to find an $SO(n)$ matrix r such that

$$R t' = e_0 \tag{70}$$

$$R u = e_1, \tag{71}$$

where $e_i$ is the $i^{th}$ column of the $n \times n$ identity matrix. This provides a zero-preserving FLO unitary $K1$ such that

$$a_i a_i^\dagger K A \left|0\right\rangle = K A \left( \sum_j s_j u_j I + \sum_{jk} t'_j u_k a_j^\dagger a_k^\dagger \right) \left|0\right\rangle \tag{72}$$

$$= K A K_1^\dagger \left( a I + b a_0^\dagger a_1^\dagger \right) K_1 \left|0\right\rangle \tag{73}$$

$$= \alpha K A K_1^\dagger \left( \cos \lambda\, I + \sin \lambda\, a_0^\dagger a_1^\dagger \right) K_1 \left|0\right\rangle, \tag{74}$$

for real constants $\alpha$, $\lambda$, $\alpha$ and $b$.

### First probability estimation algorithm

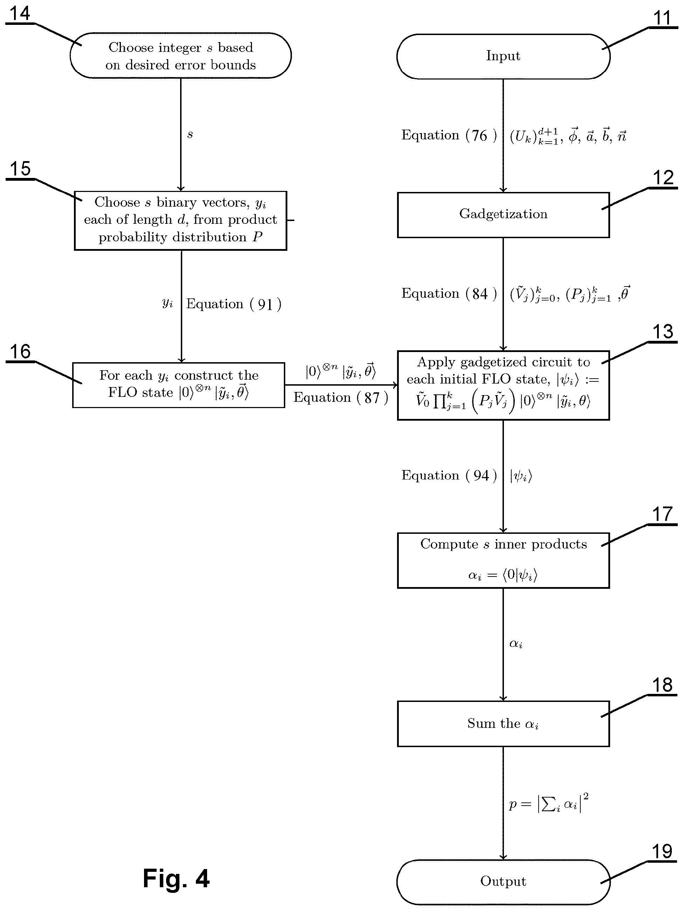

The first embodiment of a probability estimation algorithm according to the invention will be presented below with reference to Fig. 4.

Consider a quantum circuit on $n$ qubits, for even $n$, consisting of a list of gates from the following classes

    1. Arbitrary K $\in$ K, FLO unitaries with the vacuum 10) as an eigenvector
    2. Arbitrary gates of the form exp $(\mu c_i c_j)$ for $i \neq j$
    3. C$(\phi)_{i,i+1}$, controlled phase gates acting on adjacent pairs of qubits.

The first two classes consist of Fermionic Linear optical (FLO) unitaries, and indeed together generate the full class of FLO unitaries. The controlled phase gates are *not* FLO unitaries and, indeed, combined with the FLO unitaries generate the full unitary group on $n$ qubits (see Refs. [10, 17]). Since with Gaussian Fermionic operators it is possible to generate arbitrary even Hamming-weight computational basis states from the vacuum 10), only |0⟩ input states will be allowed and it will be assumed that the probability of measurement outcome 0 is computed. It is also assumed that every qubit is measured. Therefore the probability can be expressed in the form

$$p = \left| \left\langle 0 \right| U \left|0\right\rangle \right|^2 \tag{75}$$

$$= \left| \left\langle 0 \right| V_0 \prod_{j=1}^{k} C(\varphi)_{n_j n_{j+1}} V_j \left|0\right\rangle \right|^2, \tag{76}$$

where the $V_j$ are FLO unitaries. Applying the gadgetization given in Ref. [13] allows one to re-express the probability in terms of FLO unitaries and magic input states. This is expressed in figures 3a and 3b. It shall be noted that the magic states $|M(\theta)\rangle$ are such that they can be deterministically moved anywhere in the circuit using FLO unitaries. This is not true of general states, indeed the maximally non-FLO unitary, C($\pi$) is may be transformed into a swap gate by FLO unitaries.

Figs. 3a and 3b present the gadget defined in Ref. [13], specialized for the case where the 0 outcome is observed in every measurement. There are 16 possible combined outcomes of the two 4 outcome measurements. Since each outcome occurs with equal probability projecting onto the all zero outcome divides the norm of the state by 4 = $\sqrt{16}$ in addition to implementing the unitary C($\theta$). Fig. 3a presents that projecting onto the Bell basis state $|\psi^+\rangle$ = (|00⟩ + |11⟩) / $\sqrt{2}$ for each of the two measurement implements the controlled phase gate. Fig. 3b presents a case where the Bell basis projectors have been replaced with single qubit 10) projectors and $G(H,H)$ gates which are Fermionic and Gaussian.

The magic states

$$\left|M_\theta\right\rangle = \frac{1}{2} \left( \left|0000\right\rangle + \left|0011\right\rangle + \left|1100\right\rangle + e^{i\theta} \left|1111\right\rangle \right), \tag{77}$$

defined in Ref. [13] may be decomposed as a sum of two Fermionic Gaussian states

$$|M_\theta\rangle = \cos\left(\frac{\theta}{4}\right)|A(\theta)\rangle + i\sin\left(\frac{\theta}{4}\right)|B(\theta)\rangle, \tag{78}$$

where there have been defined

$$|A(\theta)\rangle = \frac{1}{2}\left(e^{-i\frac{\theta}{4}}|0000\rangle + e^{i\frac{\theta}{4}}|0011\rangle + e^{i\frac{\theta}{4}}|1100\rangle + e^{i\frac{3\theta}{4}}|1111\rangle\right) \tag{79}$$

$$|B(\theta)\rangle = \frac{1}{2}\left(e^{-i\frac{\theta}{4}}|0000\rangle - e^{i\frac{\theta}{4}}|0011\rangle - e^{i\frac{\theta}{4}}|1100\rangle + e^{i\frac{3\theta}{4}}|1111\rangle\right) \tag{80}$$

not only are $|A(\theta)\rangle$ and $|B(\theta)\rangle$ Fermionic Gaussian states, they are orthogonal (for the same $\theta$), and each is a product of two maximally entangled states

$$|A(\theta)\rangle = \frac{1}{2}e^{-i\frac{\theta}{4}}\left(|00\rangle + e^{i\frac{\theta}{2}}|11\rangle\right) \otimes \left(|00\rangle + e^{i\frac{\theta}{2}}|11\rangle\right) \tag{81}$$

$$|B(\theta)\rangle = \frac{1}{2}e^{-i\frac{\theta}{4}}\left(|00\rangle - e^{i\frac{\theta}{2}}|11\rangle\right) \otimes \left(|00\rangle - e^{i\frac{\theta}{2}}|11\rangle\right), \tag{82}$$

these properties will be useful in lemma 6.

Now applying the gadgetization as shown in Fig. 3a, 3b to the expression for the probability (75) the following is obtained:

$$p = \left|\langle 0|^{\otimes n} V_0 \prod_{j=1}^{k} C(\varphi)_{n_j n_{j+1}} V_j |0\rangle^{\otimes n}\right|^2 \tag{83}$$

$$= 16^k \left|\langle 0|^{\otimes n+4k} \tilde{V}_0 \prod_{j=1}^{k} (P_j \tilde{V}_j) |0\rangle^{\otimes n} \prod_{j=1}^{k} |M(\theta_j)\rangle\right|^2, \tag{84}$$

where

$$P_j = \left|\Psi^+\right\rangle\left\langle\Psi^+\right|_{n_j,n_j+1} \otimes \left|\Psi^+\right\rangle\left\langle\Psi^+\right|_{n_j+5,n_j+6}, \tag{85}$$

is the projector onto the two Bell states that appear in figure 3a for each gadget. Each unitary $\tilde{V}_j$ is $V_j$ with additional FLO gates added to bring the magic state to the correct position in the circuit before each gadget and bring the measured (and now useless) qubits back to the end of the circuit again after the gadget. In addition $\tilde{V}_0$ has additional $G(H,H)$ gates at the end to map the 2k $|\psi+\rangle\langle\psi+|$ states left at the end of the circuit to 4k 10) computational basis states. The factor of $16^k$ is required because the measurement outcome associated with the projector $P_j$ occurs with probability 1/16 in each gadget.

This can be expanded

$$\prod_{j=1}^{k} |M(\theta_j)\rangle = \prod_{j=1}^{k} \Big( \cos(\theta_j) |A(\theta_j)\rangle + i \sin(\theta_j) |B(\theta_j)\rangle \Big) \tag{86}$$

$$= \sum_{y \in \{0,1\}^k} i^{|y|} \left( \prod_j \cos(\theta_j)^{1-y_j} \sin(\theta_j)^{y_j} \right) |\tilde{y}, \theta\rangle , \tag{87}$$

where the 4k qubit state $|\tilde{y}, \theta\rangle$ is a tensor product of $k$ 4 qubit states and the $j^{th}$ 4 qubit state in $|\tilde{y}, \theta\rangle$ is $|A(\theta_j)\rangle$ if $y_j = 0$ and $|B(\theta_j)\rangle$ if $y_j = 1$. Substituting this into the expression for the probability the following is obtained

$$p = \left| \sum_{y \in \{0,1\}^k} 4^k i^{|y|} \left( \prod_j \cos(\theta_j)^{1-y_j} \sin(\theta_j)^{y_j} \right) \langle 0|^{\otimes n+4k} \tilde{V}_0 \prod_{j=1}^{k} (P_j \tilde{V}_j) |0\rangle^{\otimes n} |\tilde{y}, \theta\rangle \right|^2 , \tag{88}$$

now let

$$\xi^* = \sum_y \left| \left( \prod_j \cos(\theta_j)^{1-y_j} \sin(\theta_j)^{y_j} \right) \right|^2 \tag{89}$$

$$= \xi \left( \prod_j |M(\theta_j)\rangle \right) \tag{90}$$

where ç is the FLO-extent (see equation 27) so that the map

$$P : y \mapsto \frac{1}{\sqrt{\xi^*}} \left| \left( \prod_j \cos(\theta_j)^{1-y_j} \sin(\theta_j)^{y_j} \right) \right| , \tag{91}$$

is a probability distribution, and let

$$d : y \to \{0, 1, 2, 3\} , \tag{92}$$

be such that

$$i^{d(y)} \left| \left( \prod_j \cos(\theta_j)^{1-y_j} \sin(\theta_j)^{y_j} \right) \right| = i^{|y|} \left( \prod_j \cos(\theta_j)^{1-y_j} \sin(\theta_j)^{y_j} \right) \tag{93}$$

Finally the complex numbers are defined

$$\alpha_y = 4^k i^{d(y)} \langle 0|^{\otimes n+4k} \tilde{V}_0 \prod_{j=1}^{k} \left(P_j \tilde{V}_j\right) |0\rangle^{\otimes n} |\tilde{y}, \theta\rangle, \qquad (94)$$

each of which can be computed in polynomial time using the methods described previously. Now it is possible to re-express the probability $p$ to be calculated as

$$p = \xi^* \left| \sum_{y \in \{0,1\}^k} P(y)\alpha_y \right|^2, \qquad (95)$$

at this point it is necessary to bound the absolute value of each of the complex numbers in this sum.

Lemma 6 (Bounding the norm of $\alpha_y$). *For all* $y \in \{0, 1\}^k$

$$|\alpha_y| \leq 1 \qquad (96)$$

*Proof.* Clearly,

$$|\alpha_y| = 4^k \left| \langle 0|^{\otimes n+4k} \tilde{V}_0 \prod_{j=1}^{k} \left(P_j \tilde{V}_j\right) |0\rangle^{\otimes n} |\tilde{y}, \theta\rangle \right|, \qquad (97)$$

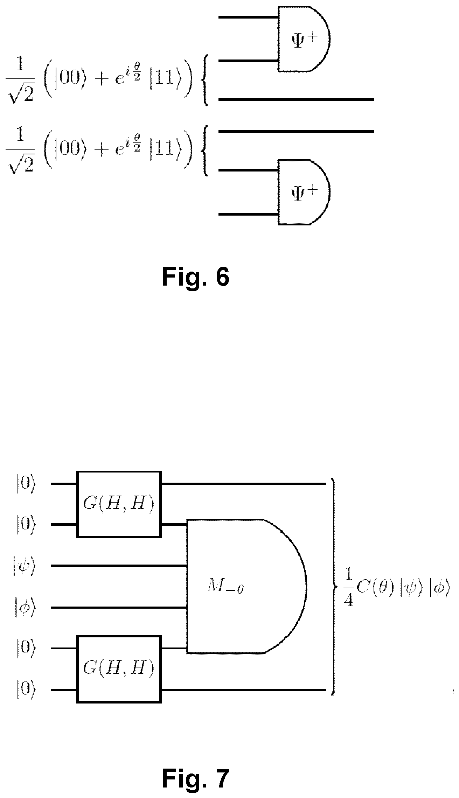

and the initial state $|\tilde{y}, \theta\rangle$ has norm 1, so it is necessary to show that each gadget that is introduced reduces the norm of the state by a factor of ¼. Each gadget will have the form shown in figure 3a, with $|M\theta\rangle$ replaced by either $|A(\theta_j)\rangle$ or $|B(\theta_j)\rangle$ depending on the value of $y_j$. It makes no difference to the following argument whether $A$ or $B$ is chosen, for notational convenience it will be assumed that $y_j = 0$ so the state is $A(\theta_j)$. In this case the gadget becomes as shown in Fig. 6.

It is now necessary to examine what happens when input two qubits of an arbitrary $n$ qubit state $|\phi\rangle$ are input on the open first and sixth branches of the gadget of Fig. 6. Schmidt decomposing the input state results in

$$|\text{input}\rangle = \sum_{a,b \in \{0,1\}} \lambda_{ab} |a\rangle |A(\theta)\rangle |b\rangle |\phi_{ab}\rangle, \qquad (98)$$

where $|a\rangle$ and $|b\rangle$ are computational basis states, the $|\phi_{ab}\rangle$ a set of 4 orthonormal vectors on the remaining $n$ - 2 qubits comprising the $n$ qubit state and the $\lambda_{ab}$ are positive real numbers whose squares sum to the square of the norm of the input state. Now

$$|\text{input}\rangle = \frac{1}{2} \sum_{a,b \in \{0,1\}} \lambda_{ab} |a\rangle \left(|00\rangle + e^{i\frac{\theta}{2}} |11\rangle\right) \left(|00\rangle + e^{i\frac{\theta}{2}} |11\rangle\right) |b\rangle |\phi_{ab}\rangle \tag{99}$$

$$= \frac{\lambda_{00}}{2} \left(|000\rangle + e^{i\frac{\theta}{2}} |011\rangle\right) \left(|000\rangle + e^{i\frac{\theta}{2}} |110\rangle\right) |\phi_{00}\rangle + \tag{100}$$

$$\frac{\lambda_{01}}{2} \left(|000\rangle + e^{i\frac{\theta}{2}} |011\rangle\right) \left(|001\rangle + e^{i\frac{\theta}{2}} |111\rangle\right) |\phi_{01}\rangle + \tag{101}$$

$$\frac{\lambda_{10}}{2} \left(|100\rangle + e^{i\frac{\theta}{2}} |111\rangle\right) \left(|000\rangle + e^{i\frac{\theta}{2}} |110\rangle\right) |\phi_{10}\rangle + \tag{102}$$

$$\frac{\lambda_{11}}{2} \left(|100\rangle + e^{i\frac{\theta}{2}} |111\rangle\right) \left(|001\rangle + e^{i\frac{\theta}{2}} |111\rangle\right) |\phi_{11}\rangle, \tag{103}$$

since

$$\left|\Psi^+\right\rangle\left\langle\Psi^+\right| = \frac{1}{2} \left(|00\rangle + |11\rangle\right) \left(\langle 00| + \langle 11|\right) \tag{104}$$

$$\left|\Psi^+\right\rangle\left\langle\Psi^+\right| |00\rangle = \frac{1}{\sqrt{2}} \left|\Psi^+\right\rangle \tag{105}$$

$$\left|\Psi^+\right\rangle\left\langle\Psi^+\right| |11\rangle = \frac{1}{\sqrt{2}} \left|\Psi^+\right\rangle \tag{106}$$

$$\left|\Psi^+\right\rangle\left\langle\Psi^+\right| |01\rangle = \left|\Psi^+\right\rangle\left\langle\Psi^+\right| |10\rangle = 0, \tag{107}$$

results in

$$\left(\left|\Psi^+\right\rangle\left\langle\Psi^+\right| \otimes I \otimes I \otimes \left|\Psi^+\right\rangle\left\langle\Psi^+\right|\right) |\text{input}\rangle = \frac{\lambda_{00}}{4} \left|\Psi^+\right\rangle |0\rangle |0\rangle \left|\Psi^+\right\rangle |\phi_{00}\rangle + \tag{108}$$

$$\frac{\lambda_{01}}{4} e^{i\frac{\theta}{2}} \left|\Psi^+\right\rangle |0\rangle |1\rangle \left|\Psi^+\right\rangle |\phi_{01}\rangle + \tag{109}$$

$$\frac{\lambda_{10}}{4} e^{i\frac{\theta}{2}} \left|\Psi^+\right\rangle |1\rangle |0\rangle \left|\Psi^+\right\rangle |\phi_{10}\rangle + \tag{110}$$

$$\frac{\lambda_{11}}{4} e^{i\theta} \left|\Psi^+\right\rangle |1\rangle |1\rangle \left|\Psi^+\right\rangle |\phi_{11}\rangle, \tag{111}$$

evidently the norm of this vector is a quarter of the norm of the vector that was started with. Recapping

$$p = \xi^* \left| \sum_{y \in \{0,1\}^k} P(y)\alpha_y \right|^2, \tag{112}$$

where each $\alpha_y$ is a complex number which may be calculated in polynomial time with $|\alpha_y| \leq 1$ and P is a product probability distribution (i.e. $P(y) = \Pi_j\, Q_j(y_j)$ for some $Q_j$). A sampling algorithm will be now used to approximate p, employing lemma 7 of Ref. [5] with the special case that here d = 1 (complex numbers are one dimensional complex vectors). Let

$$\mu = \sum_{y \in \{0,1\}^k} P(y)\sqrt{\xi}\alpha_y, \tag{113}$$

and let $(y_j)^s_j = 1$ be a list of s samples independently sampled from the probability distribution P. Consider the sample mean

$$m = \frac{1}{s}\sum_j \sqrt{\xi}\alpha_{y_j}, \tag{114}$$

now for all $\epsilon > 0$

$$\Pr\left(\left|\mu^2 - m^2\right| \geq \epsilon\right) \leq 2e^2 \exp\left(\frac{-s(\sqrt{p+\epsilon} - \sqrt{p})^2}{2\left(\sqrt{\xi} + \sqrt{p}\right)^2}\right). \tag{115}$$

Now if it is demanded that

$$\Pr\left(\left|\mu^2 - m^2\right| \geq \epsilon\right) < \delta, \tag{116}$$

for some $\delta > 0$ then s must be such that

$$2e^2 \exp\left(\frac{-s(\sqrt{p+\epsilon} - \sqrt{p})^2}{2\left(\sqrt{\xi} + \sqrt{p}\right)^2}\right) < \delta \tag{117}$$

$$\frac{-s(\sqrt{p+\epsilon} - \sqrt{p})^2}{2\left(\sqrt{\xi} + \sqrt{p}\right)^2} < \log\left(\frac{\delta}{2e^2}\right) \tag{118}$$

$$-s(\sqrt{p+\epsilon} - \sqrt{p})^2 < 2\left(\sqrt{\xi} + \sqrt{p}\right)^2 \log\left(\frac{\delta}{2e^2}\right) \tag{119}$$

$$s > 2\frac{\left(\sqrt{\xi} + \sqrt{p}\right)^2}{(\sqrt{p+\epsilon} - \sqrt{p})^2} \log\left(\frac{2e^2}{\delta}\right). \tag{120}$$

It is instructive to compare equation (120) to the corresponding equation

$$s \geq 2W(\mathcal{E})^2 \frac{1}{\epsilon^2} \log\left(\frac{1}{\delta}\right), \qquad (121)$$

of Ref. [11] where $W(\varepsilon)$ is the Fermionic non-linearity. Analytic forms for the Fermionic non-linearity bounds arising from the decompositions of Ref. [11] are not given, however the Fermionic nonlinearity of a swap gate W(SWAP) is approximately 3 according to figure 1 of the same reference. For a circuit with k swap gates, the algorithm of Ref. [11] will therefore require

$$s = 9^k \times \frac{2}{\epsilon^2} \log\left(\frac{1}{\delta}\right) \qquad (122)$$

samples while the one according to the present invention will require

$$s = 2\frac{\left(\sqrt{2^k} + \sqrt{p}\right)^2}{(\sqrt{p+\epsilon} - \sqrt{p})^2} \log\left(\frac{2e^2}{\delta}\right) \qquad (123a)$$

$$\approx 2^k \frac{2}{(\sqrt{p+\epsilon} - \sqrt{p})^2} \log\left(\frac{2e^2}{\delta}\right). \qquad (123b)$$

Of course this dramatic improvement in scaling comes at the cost of using the more complicated phase-sensitive FLO simulation routines described above, rather than the standard phase-insensitive routines known since Ref. [7].

This first embodiment of the algorithm presented herein is summarized in Fig. 4, illustrating the following steps:

- receiving (11), as input, the quantum circuit U to be simulated, expressed as a list of quantum gates, each of which is either a FLO gate, or a controlled phase gate;
- performing gadgetization (12) by converting the controlled phase gates into FLO operations and adding the required magic states;
- receiving (14) an integer s based on desired error bounds (according to equation (120), wherein the value of s varies considerably depending on the error bounds chosen but will always be less than two to the power of the number of non-FLO gates in the circuit);
- choosing (15) s binary vectors $y_i$, each having a length $d$ (by randomly sampling them from product probability distribution P defined in equation (91));
- constructing (16), for each binary vector $y_i$, Fermionic-linear-optical (FLO) state $|\tilde{y}_i\rangle$, (based on equation (87));
- applying (13) the gadgetized circuit to each initial FLO state;
- computing (17), s inner products $\alpha_i$ employing Lemma 3;
- summing (18) the inner products $\alpha_i$;
- outputting (19) an estimate given by m2, of the probability (which is equal to $\mu^2$) satisfying the error bounds given by equation (115).

## Second probability estimation algorithm

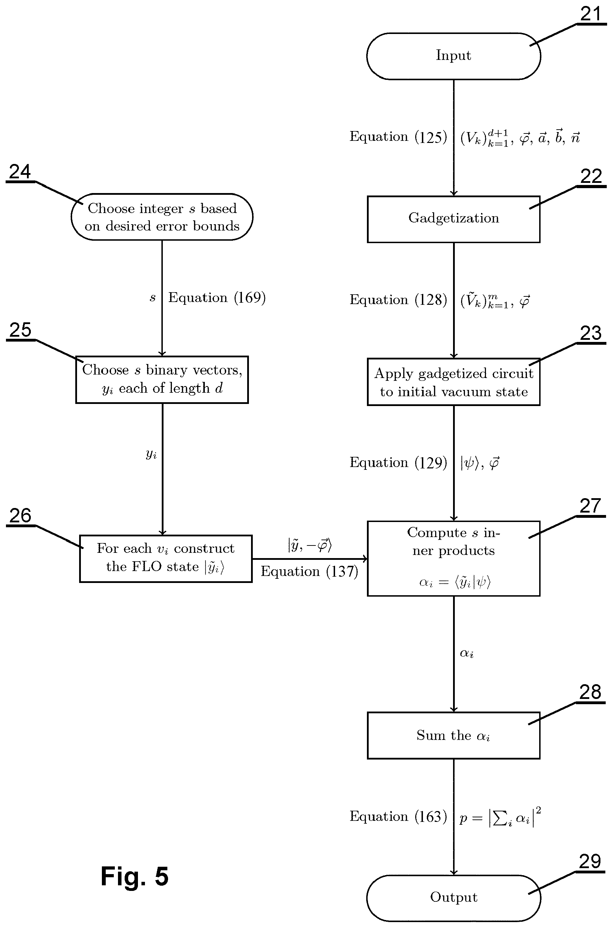

The first embodiment of a probability estimation algorithm according to the invention will be presented below with reference to Fig. 5.

Consider a quantum circuit on $n$ qubits, for even $n$, consisting of a list of gates from the following classes:

1. Arbitrary K $\in$ K, FLO unitaries with the vacuum 10) as an eigenvector
2. Arbitrary gates of the form exp $(\mu c_i c_j)$ for $i \neq j$
3. d instances of $C(\phi_i)_{i,i+1}$, controlled phase gates acting on adjacent pairs of qubits.

The first two classes consist of Fermionic Linear optical (FLO) unitaries, and indeed together generate the full class of FLO unitaries. The controlled phase gates are *not* FLO unitaries and, indeed, combined with the FLO unitaries generate the full unitary group on $n$ qubits (see Refs. [10, 17]). It is assumed that the input state, and measurement outcome are arbitrary even Hamming-weight computational basis vectors a and b respectively. It is also assumed that every qubit is measured. Therefore the probability can be expressed in the form

$$p = \left| \langle b | U | a \rangle \right|^2 \qquad (124)$$

$$= \left| \langle b | V_{d+1} \prod_{j=1}^{d} C(\varphi_j)_{n_j n_j+1} V_j | a \rangle \right|^2, \qquad (125)$$

where the $V_j$ are FLO unitaries and each $C(\varphi_j)_{n_j n_{j+1}}$ is a controlled phase gate of phase $\varphi_j$ acting on qubits $n_j$ and $n_{j+1}$. Applying the gadgetization given in Ref. [13] gives the following equation, valid for all qubit states $|i\rangle$,

$$\langle i | \langle j | C(\theta) | \phi \rangle | \psi \rangle = 4 \langle 0 | \langle 0 | \langle i | \langle j | \langle 0 | \langle 0 | \left( G(H,H) \otimes I^{\otimes 2} \otimes G(H,H) \right) | \phi \rangle | M_\theta \rangle | \psi \rangle, \qquad (126)$$

or, equivalently,

$$\langle \phi | \langle \psi | C(-\theta) | i \rangle | j \rangle = 4 \langle \phi | \langle M_\theta | \langle \psi | \left( G(H,H) \otimes I^{\otimes 2} \otimes G(H,H) \right) | 0 \rangle | 0 \rangle | i \rangle | j \rangle | 0 \rangle | 0 \rangle. \qquad (127)$$

This second formulation is slightly more convenient as it allows one to apply full (gadgetized) input circuit to an initial (FLO) vacuum state, and then post-select on non-FLO states at the end.

Therefore, the probability to be estimated is expressed as

$$p = 16^d \left| \langle 0 |^n \langle M_{-\varphi_1} | \cdots \langle M_{-\varphi_d} | \prod_{j=1}^{m} \tilde{V}_j | 0 \rangle^{\otimes(n+4d)} \right|^2, \qquad (128)$$

where the $\tilde{V}_j$ are elementary FLO unitaries expressing the gadgetized circuit. Note that although swap gates are *not* FLO operations specific states can be swapped, including computational basis states and the magic states $|M\theta\rangle$ through the circuit, so it can be assumed the magic states are the last 4d qubits. There were also added FLO operations at the start and end of the circuit to replace the input and output states a and b with vacuum states. Now it is possible to apply the $\tilde{V}_j$ circuit to the initial $|0\rangle n+4d$ vacuum state in polynomial time, using the methods as described above to obtain the state

$$| \psi \rangle = \prod_{j=1}^{m} \tilde{V}_j | 0 \rangle^{\otimes(n+4d)}. \qquad (129)$$

The magic states

$$| M_\theta \rangle = \frac{1}{2} \left( |0000\rangle + |0011\rangle + |1100\rangle + e^{i\theta} |1111\rangle \right), \qquad (130)$$

defined in Ref. [13] may be decomposed as a sum of two Fermionic Gaussian states

$$| M_\theta \rangle = \cos\left(\frac{\theta}{4}\right) | A(\theta) \rangle + i \sin\left(\frac{\theta}{4}\right) | B(\theta) \rangle, \qquad (131)$$

where it is defined

$$| A(\theta) \rangle = \frac{1}{2} \left( e^{-i\frac{\theta}{4}} |0000\rangle + e^{i\frac{\theta}{4}} |0011\rangle + e^{i\frac{\theta}{4}} |1100\rangle + e^{i\frac{3\theta}{4}} |1111\rangle \right) \qquad (132)$$

$$|B(\theta)\rangle = \frac{1}{2}\left(e^{-i\frac{\theta}{4}}|0000\rangle - e^{i\frac{\theta}{4}}|0011\rangle - e^{i\frac{\theta}{4}}|1100\rangle + e^{i\frac{3\theta}{4}}|1111\rangle\right) \tag{133}$$

not only are $|A(\theta)\rangle$ and $|B(\theta)\rangle$ Fermionic Gaussian states, they are orthogonal (for the same $\theta$), and each is a product of two maximally entangled states

$$|A(\theta)\rangle = \frac{1}{2}e^{-i\frac{\theta}{4}}\left(|00\rangle + e^{i\frac{\theta}{2}}|11\rangle\right) \otimes \left(|00\rangle + e^{i\frac{\theta}{2}}|11\rangle\right) \tag{134}$$

$$|B(\theta)\rangle = \frac{1}{2}e^{-i\frac{\theta}{4}}\left(|00\rangle - e^{i\frac{\theta}{2}}|11\rangle\right) \otimes \left(|00\rangle - e^{i\frac{\theta}{2}}|11\rangle\right), \tag{135}$$

these properties will be useful in lemma 7.

Now it is expanded

$$\prod_{j=1}^{d}|M(-\varphi_j)\rangle = \prod_{j=1}^{4}\left(\cos(-\varphi_j)|A(-\varphi_j)\rangle + i\sin(-\varphi_j)|B(-\varphi_j)\rangle\right) \tag{136}$$

$$= \sum_{y\in\{0,1\}^k} i^{|y|}\left(\prod_j \cos(-\varphi_j)^{1-y_j}\sin(-\varphi_j)^{y_j}\right)|\tilde{y}, -\vec{\varphi}\rangle, \tag{137}$$

where the 4k qubit state $|\tilde{y}, \theta\rangle$ is a tensor product of $k$ 4 qubit states and the $j^{th}$ 4 qubit state in $|\tilde{y}, \theta\rangle$ is $|A(\theta_j)\rangle$ if $y_j = 0$ and $|B(\theta_j)\rangle$ if $y_j = 1$. Substituting this into the expression for the probability (128) the following is obtained:

$$p = 16^d\left|\langle 0|^n \langle M_{-\varphi_1}| \cdots \langle M_{-\varphi_d}|\prod_{j=1}^{m}\tilde{V}_j|0\rangle^{\otimes(n+4d)}\right|^2 \tag{138}$$

$$= \left|\sum_{y\in\{0,1\}^d} 4^d i^{-|y|}\left(\prod_j \cos(-\varphi_j)^{1-y_j}\sin(-\varphi_j)^{y_j}\right)\langle 0|^n \langle\tilde{y}, -\vec{\varphi}|\prod_{j=1}^{m}\tilde{V}_j|0\rangle^{\otimes(n+4d)}\right|^2, \tag{139}$$

now let

$$\xi^* = \sum_y \left|\left(\prod_j \cos(-\varphi_j)^{1-y_j}\sin(-\varphi_j)^{y_j}\right)\right|^2 \tag{140}$$

$$= \xi\left(\prod_j |M(-\varphi_j)\rangle\right), \tag{141}$$

where ç is the FLO-extent (see equation 27) so that the map

$$P : y \mapsto \frac{1}{\sqrt{\xi^*}} \left| \left( \prod_j \cos(-\varphi_j)^{1-y_j} \sin(-\varphi_j)^{y_j} \right) \right| , \tag{142}$$

is a probability distribution, and the complex numbers are defined:

$$\alpha_y = 4^d i^{-|y|} \langle 0 |^n \langle \tilde{y}, -\vec{\varphi} | \prod_{j=1}^{m} \tilde{V}_j | 0 \rangle^{\otimes(n+4d)} , \tag{143}$$

each of which can be computed in polynomial time using the methods described above. Now the probability *p* to be calculated can be re-expressed as

$$p = \xi^* \left| \sum_{y \in \{0,1\}^k} P(y) \alpha_y \right|^2 , \tag{144}$$

at this point it is necessary to bound the absolute value of each of the complex numbers in this sum.

Lemma 7 (Bounding the norm of $\alpha y$). *For all* $y \in \{0, 1\}^d$

$$|\alpha_y| \leq 1 \tag{145}$$

*Proof.* Clearly,

$$|\alpha_y| = 4^d \left| \langle 0 |^n \langle \tilde{y}, -\vec{\varphi} | \prod_{j=1}^{m} \tilde{V}_j | 0 \rangle^{\otimes(n+4d)} \right| \tag{146}$$

and the initial state $|\tilde{y}, \theta\rangle$ has norm 1, so it is necessary to show that each gadget that is introduced reduces the norm of the state by a factor of ¼. Each gadget will have the form shown in figure 3a, with $|M\theta\rangle$ replaced by either $|A(\theta_j)\rangle$ or $|B(\theta_j)\rangle$ depending on the value of $y_j$. It makes no difference to the following argument whether choose *A* or *B* is chosen, for notational convenience it will be assumed that $y_j = 0$ so the state is $A(\theta_j)$. In this case the gadget becomes as shown in Fig. 7.

Now it will be examined what happens when two qubits of an arbitrary *n* qubit state $|\phi\rangle$ are input on the open first and sixth branches of this gadget. Schmidt decomposing the input state, the following is obtained:

$$|\text{input}\rangle = \sum_{a,b \in \{0,1\}} \lambda_{ab} |a\rangle |A(\theta)\rangle |b\rangle |\phi_{ab}\rangle , \tag{147}$$

where $|a\rangle$ and $|b\rangle$ are computational basis states, the $|\phi_{ab}\rangle$ a set of 4 orthonormal vectors on the remaining *n* - 2 qubits comprising the *n* qubit state and the $\lambda_{ab}$ are positive real numbers whose squares sum to the square of the norm of the input state. Now

$$|\text{input}\rangle = \frac{1}{2} \sum_{a,b\in\{0,1\}} \lambda_{ab} |a\rangle \left(|00\rangle + e^{i\frac{\theta}{2}}|11\rangle\right)\left(|00\rangle + e^{i\frac{\theta}{2}}|11\rangle\right)|b\rangle|\phi_{ab}\rangle \tag{148}$$

$$= \frac{\lambda_{00}}{2}\left(|000\rangle + e^{i\frac{\theta}{2}}|011\rangle\right)\left(|000\rangle + e^{i\frac{\theta}{2}}|110\rangle\right)|\phi_{00}\rangle + \tag{149}$$

$$\frac{\lambda_{01}}{2}\left(|000\rangle + e^{i\frac{\theta}{2}}|011\rangle\right)\left(|001\rangle + e^{i\frac{\theta}{2}}|111\rangle\right)|\phi_{01}\rangle + \tag{150}$$

$$\frac{\lambda_{10}}{2}\left(|100\rangle + e^{i\frac{\theta}{2}}|111\rangle\right)\left(|000\rangle + e^{i\frac{\theta}{2}}|110\rangle\right)|\phi_{10}\rangle + \tag{151}$$

$$\frac{\lambda_{11}}{2}\left(|100\rangle + e^{i\frac{\theta}{2}}|111\rangle\right)\left(|001\rangle + e^{i\frac{\theta}{2}}|111\rangle\right)|\phi_{11}\rangle, \tag{152}$$

since

$$\left|\Psi^+\right\rangle\left\langle\Psi^+\right| = \frac{1}{2}\left(|00\rangle + |11\rangle\right)\left(\langle00| + \langle11|\right) \tag{153}$$

$$\left|\Psi^+\right\rangle\left\langle\Psi^+\right||00\rangle = \frac{1}{\sqrt{2}}\left|\Psi^+\right\rangle \tag{154}$$

$$\left|\Psi^+\right\rangle\left\langle\Psi^+\right||11\rangle = \frac{1}{\sqrt{2}}\left|\Psi^+\right\rangle \tag{155}$$

$$\left|\Psi^+\right\rangle\left\langle\Psi^+\right||01\rangle = \left|\Psi^+\right\rangle\left\langle\Psi^+\right||10\rangle = 0, \tag{156}$$

leads to

$$\left(\left|\Psi^+\right\rangle\left\langle\Psi^+\right| \otimes I \otimes I \otimes \left|\Psi^+\right\rangle\left\langle\Psi^+\right|\right)|\text{input}\rangle = \frac{\lambda_{00}}{4}\left|\Psi^+\right\rangle|0\rangle|0\rangle\left|\Psi^+\right\rangle|\phi_{00}\rangle + \tag{157}$$

$$\frac{\lambda_{01}}{4}e^{i\frac{\theta}{2}}\left|\Psi^+\right\rangle|0\rangle|1\rangle\left|\Psi^+\right\rangle|\phi_{01}\rangle + \tag{158}$$

$$\frac{\lambda_{10}}{4}e^{i\frac{\theta}{2}}\left|\Psi^+\right\rangle|1\rangle|0\rangle\left|\Psi^+\right\rangle|\phi_{10}\rangle + \tag{159}$$

$$\frac{\lambda_{11}}{4}e^{i\theta}\left|\Psi^+\right\rangle|1\rangle|1\rangle\left|\Psi^+\right\rangle|\phi_{11}\rangle, \tag{160}$$

evidently the norm of this vector is a quarter of the norm of the vector that was started with. Recapping

$$p = \xi^* \left| \sum_{y \in \{0,1\}^k} P(y)\alpha_y \right|^2, \tag{161}$$

where each $\alpha_y$ is a complex number which may be calculated in polynomial time with $|\alpha_y| \le 1$ and P is a product probability distribution (i.e. $P(y) = \Pi_j \ Q_j(y_j)$ for some $Q_j$). Now it will be attempted to use a sampling algorithm to approximate p, employing lemma 7 of Ref. [5] with the special case that here d = 1 (complex numbers are one dimensional complex vectors). Let

$$\mu = \sum_{y \in \{0,1\}^k} P(y)\sqrt{\xi}\alpha_y, \tag{162}$$

and let $(y_j)^s_j$ =1 be a list of s samples independently sampled from the probability distribution P. Consider the sample mean

$$m = \frac{1}{s} \sum_j \sqrt{\xi}\alpha_{y_j}, \tag{163}$$

now for all $\varepsilon > 0$

$$\mathrm{Pr}(\left|\mu^2 - m^2\right| \ge \epsilon) \le 2e^2 \exp\left( \frac{-s(\sqrt{p+\epsilon} - \sqrt{p})^2}{2\left(\sqrt{\xi} + \sqrt{p}\right)^2} \right). \tag{164}$$

Now if it is demanded that

$$\mathrm{Pr}(\left|\mu^2 - m^2\right| \ge \epsilon) < \delta, \tag{165}$$

for some $\delta > 0$ then s is required to be such that

$$2e^2 \exp\left( \frac{-s(\sqrt{p+\epsilon} - \sqrt{p})^2}{2\left(\sqrt{\xi} + \sqrt{p}\right)^2} \right) < \delta \tag{166}$$

$$\frac{-s(\sqrt{p+\epsilon} - \sqrt{p})^2}{2\left(\sqrt{\xi} + \sqrt{p}\right)^2} < \log\left( \frac{\delta}{2e^2} \right) \tag{167}$$

$$-s(\sqrt{p+\epsilon} - \sqrt{p})^2 < 2\left(\sqrt{\xi} + \sqrt{p}\right)^2 \log\left( \frac{\delta}{2e^2} \right) \tag{168}$$

$$s > 2\frac{\left(\sqrt{\xi} + \sqrt{p}\right)^2}{(\sqrt{p+\epsilon} - \sqrt{p})^2} \log\left( \frac{2e^2}{\delta} \right). \tag{169}$$

It is instructive to compare equation (169) to the corresponding equation

$$s \geq 2W(\mathcal{E})^2 \frac{1}{\epsilon^2} \log\left(\frac{1}{\delta}\right), \qquad (170)$$

of Ref. [11] where W(E) is the Fermionic non-linearity. Analytic forms for the Fermionic non-linearity bounds arising from the decompositions of Ref. [11] are not given, however the Fermionic nonlinearity of a swap gate W(SWAP) is approximately 3 according to figure 1 of that reference. For a circuit with k swap gates, the algorithm of Ref. [11] will therefore require

$$s = 9^k \times \frac{2}{\epsilon^2} \log\left(\frac{1}{\delta}\right) \qquad (171)$$

samples while the one according to this embodiment will require

$$s = 2 \frac{\left(\sqrt{2^k} + \sqrt{p}\right)^2}{(\sqrt{p+\epsilon} - \sqrt{p})^2} \log\left(\frac{2e^2}{\delta}\right) \qquad (172)$$

$$\approx 2^k \frac{2}{(\sqrt{p+\epsilon} - \sqrt{p})^2} \log\left(\frac{2e^2}{\delta}\right). \qquad (173)$$

Of course this dramatic improvement in scaling comes at the cost of using the more complicated phase-sensitive FLO simulation routines described above, rather than the standard phase-insensitive routines known since Ref. [7].

This second embodiment of the algorithm presented herein is summarized in Fig. 5, illustrating the following steps:

- receiving (21), as input, the quantum circuit U to be simulated, expressed as a list of quantum gates, each of which is either a FLO gate, or a controlled phase gate;
- performing gadgetization (22) by converting the controlled phase gates into FLO operations and adding the required magic states;
- applying (23) the gadgetized circuit to initial vacuum state;
- receiving (24) an integer s based on desired error bounds (according to equation (169), wherein the value of s varies considerably depending on the error bounds chosen but will always be less than two to the power of the number of non-FLO gates in the circuit);
- choosing (25) s binary vectors $y_i$, each having a length d;
- constructing (26), for each binary vector $y_i$, Fermionic-linear-optical (FLO) state $|\tilde{y}_i\rangle$, (based on equation (137));
- computing (27), based on results of steps (23) and (26), s inner products $\alpha_i$ employing Lemma 3;
- summing (28) the inner products $\alpha_i$;
- outputting (29) an estimate given by m2, of the probability (which is equal to $\mu^2$) satisfying the error bounds given by equation (164).

The difference between the first and second algorithm is that in the first algorithm, the initial state the gadgetized circuit is applied to is not an FLO state, so this non-FLO state must be written as a superposition of exponentially many of FLO states, and terms from this sum must be sampled before the circuit can be applied to them. In the second algorithm, the initial state is FLO, but the final measurement is not an FLO projector (it is a projector onto a non-FLO "magic" state), this means that the gadgetized circuit can be directly applied to the initial state before any sampling is done. In terms of runtime, the dominant contribution, the exponential component of the scaling, is the same, however the in the first algorithm the exponential component of the runtime is multiplied by a factor proportional to the number of gates in the circuit (because each gate must be applied to each sampled state in turn), whereas in the second algorithm the exponential component is independent of the circuit length (while still being multiplied by factors polynomial in the number of qubits in the circuit) (wherein the circuit "length" determines how many gates it contains, and the circuit "width" determines how many qubits it contains).

**Classic computer system**

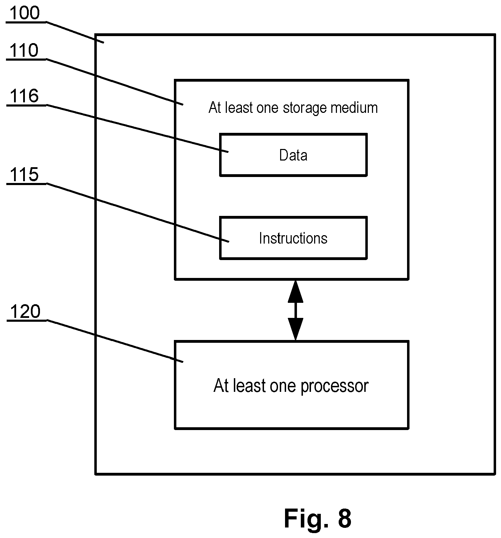

The functionality described herein can be implemented in a classic computer system 100, such as shown in Fig. 8. The system 100 may include at least one nontransitory processor-readable storage medium 110 that stores at least one of processor-executable instructions 115 or data 116; and at least one processor 120 communicably coupled to the at least one nontransitory processor-readable storage medium 110. The at least one processor 120 may be configured to (by executing the instructions 115) perform the algorithms of Fig. 4 or 5.

While the invention has been described with respect to a limited number of embodiments, it will be appreciated that many variations, modifications and other applications of the invention may be made. Therefore, the claimed invention as recited in the claims that follow is not limited to the embodiments described herein.

**List of references**

[1] Steven T. Flammia and Yi-Kai Liu. "Direct Fidelity Estimation from Few Pauli Measurements". In: Phys. Rev. Lett. 106 (23 2011), p. 230501. doi: 10.1103/PhysRevLett. 106.230501. url: https://link.aps.org/doi/10.1103/PhysRevLett.106.230501.

[2] Frank Arute, Kunal Arya, Ryan Babbush, Dave Bacon, Joseph C. Bardin, Rami Barends, Rupak Biswas, Sergio Boixo, Fernando G. S. L. Brandao, David A. Buell, Brian Burkett, Yu Chen, Zijun Chen, Ben Chiaro, Roberto Collins, William Courtney, Andrew Dunsworth, Edward Farhi, Brooks Foxen, Austin Fowler, Craig Gidney, Marissa Giustina, Rob Graff, Keith Guerin, Steve Habegger, Matthew P. Harrigan, Michael J. Hartmann, Alan Ho, Markus Hoffmann, Trent Huang, Travis S. Humble, Sergei V. Isakov, Evan Jeffrey, Zhang Jiang, Dvir Kafri, Kostyantyn Kechedzhi, Julian Kelly, Paul V. Klimov, Sergey Knysh, Alexander Korotkov, Fedor Kostritsa, David Landhuis, Mike Lindmark, Erik Lucero, Dmitry Lyakh, Salvatore Mandr'a, Jarrod R. McClean, Matthew McEwen, Anthony Megrant, Xiao Mi, Kristel Michielsen, Masoud Mohseni, Josh Mutus, Ofer Naaman, Matthew Neeley, Charles Neill, Murphy Yuezhen Niu, Eric Ostby, Andre Petukhov, John C. Platt, Chris Quintana, Eleanor G. Rieffel, Pedram Roushan, Nicholas C. Rubin, Daniel Sank, Kevin J. Satzinger, Vadim Smelyanskiy, Kevin J. Sung, Matthew D. Trevithick, Amit Vainsencher, Benjamin Villalonga, Theodore White, Z. Jamie Yao, Ping Yeh, Adam Zalcman, Hartmut Neven, and John M. Martinis. "Quantum supremacy using a programmable superconducting processor". In: Nature 574.7779 (Oct. 2019), pp. 505-510. issn: 1476-4687. doi: 10.1038/s41586-019-1666-5. url: https://doi.org/10.1038/s41586-019-1666-5.

[3] Han-Sen Zhong et al. "Quantum computational advantage using photons". In: Science 370.6523 (2020), pp. 1460-1463. doi: 10.1126/science.abe8770.

[4] S. Bravyi, D. Browne, P. Calpin, E. Campbell, D Gosset, and M. Howard. "Simulation of quantum circuits by low-rank stabilizer decompositions". In: Quantum 3 (2019). doi: 10.22331/q-2019-09-02-181.

[5] Hakop Pashayan, Oliver Reardon-Smith, Kamil Korzekwa, and Stephen D. Bartlett. "Fast Estimation of Outcome Probabilities for Quantum Circuits". In: PRX Quantum 3 (2 June 2022), p. 020361. doi: 10.1103/PRXQuantum.3.020361. url: https://link.aps.org/doi/10.1103/PRXQuantum.3.020361.

[6] James R. Seddon, Bartosz Regula, Hakop Pashayan, Yingkai Ouyang, and Earl T. Campbell. "Quantifying Quantum Speedups: Improved Classical Simulation From Tighter Magic Monotones". In: PRX Quantum 2 (1 Mar. 2021), p. 010345. doi: 10.1103/PRXQuantum.2.010345. url: https://link.aps.org/doi/10.1103/PRXQuantum.2.010345.

[7] Barbara M. Terhal and David P. DiVincenzo. "Classical simulation of noninteracting-fermion quantum circuits". In: Phys. Rev. A 65 (3 Mar. 2002), p. 032325. doi: 10.1103/PhysRevA.65.032325. url: https://link.aps.org/doi/10.1103/PhysRevA.65.032325.

[8] Sergey Bravyi. "Lagrangian representation for fermionic linear optics". In: Quantum Information & Computation 5.3 (May 2005), pp. 216-238. doi: 10.5555/2011637.2011640.

[9] Sergey Bravyi and David Gosset. "Complexity of Quantum Impurity Problems". In: Communications in Mathematical Physics 356 (2017), pp. 451-500. doi: 10.1007/s00220-017-2976-9.

[10] Micha 1 Oszmaniec and Zoltan Zimboras. "Universal Extensions of Restricted Classes of Quantum Operations". In: Phys. Rev. Lett. 119 (22 Nov. 2017), p. 220502. doi: 10.1103/PhysRevLett. 119.220502. url: https://link.aps.org/doi/10.1103/PhysRevLett.119.220502.

[11] Shigeo Hakkaku, Yuichiro Tashima, Kosuke Mitarai, Wataru Mizukami, and Keisuke Fujii. "Quantifying Fermionic Nonlinearity of Quantum Circuits". Dec. 2021. url: https://arxiv.org/abs/2111.14599.

[12] Micha 1 Oszmaniec, Ninnat Dangniam, Mauro E.S. Morales, and Zolt'an Zimbor'as. "Fermion Sampling: A Robust Quantum Computational Advantage Scheme Using Fermionic Linear Optics and Magic Input States". In: PRX Quantum 3 (2 May 2022), p. 020328. doi: 10.1103/PRXQuantum.3.020328. url: https://link.aps.org/doi/10.1103/PRXQuantum.3.020328.

[13] M. Hebenstreit, R. Jozsa, B. Kraus, S. Strelchuk, and M. Yoganathan. "All Pure Fermionic Non-Gaussian States Are Magic States for Matchgate Computations". In: Phys. Rev. Lett. 123 (8 Aug. 2019), p. 080503. doi: 10.1103/PhysRevLett.123.080503. url: https://link.aps.org/doi/10.1103/PhysRevLett.123.080503.

[14] Sergey Bravyi. "Universal quantum computation with the v = 5/2 fractional quantum Hall state". In: Phys. Rev. A 73 (4 Apr. 2006), p. 042313. doi: 10.1103/PhysRevA.73.042313. url: https://link.aps.org/doi/10.1103/PhysRevA.73.042313.

[15] Alexei Kitaev. "Anyons in an exactly solved model and beyond". In: Annals of Physics 321.1 (2006). January Special Issue, pp. 2-111. issn: 0003-4916. doi: https://doi.org/10.1016/j.aop.2005.10.005. url:https://www.sciencedirect.com/science/article/pii/S0003491605002381.

[16] Kosuke Mitarai and Keisuke Fujii. "Constructing a virtual two-qubit gate by sampling single-qubit operations". In: New Journal of Physics 23.2 (Feb. 2021), p. 023021. doi: 10.1088/1367- 2630/abd7bc.url: https://doi.org/10.1088/1367-2630/abd7bc.

[17] Daniel J. Brod and Ernesto F. Galv'ao. "Extending matchgates into universal quantum computation". In:Phys. Rev. A 84 (2 Aug. 2011), p. 022310. doi: 10.1103/PhysRevA.84.022310. url: https://link.aps.org/doi/10.1103/PhysRevA.84.022310.

## Claims

1. A method for simulating, by means of a classical computer, a quantum circuit dominated by free fermionic operations, the method comprising the steps of:

   - receiving (11, 21), as input, the quantum circuit U to be simulated, expressed as a list of quantum gates, each of which is either a FLO gate, or a controlled phase gate;
   - performing gadgetization (12, 22) by converting the controlled phase gates into FLO operations and adding the required magic states;
   - receiving (14, 24) an integer s based on desired error bounds;
   - choosing (15, 25) s binary vectors $y_i$, each having a length d;
   - constructing (16, 26), for each binary vector $y_i$, Fermionic-linear-optical (FLO) state $|\tilde{y_i}\rangle$;
   - applying (13, 23) the gadgetized circuit to each initial FLO state or to initial vacuum state;
   - computing (17, 27), s inner products $\alpha_i$;
   - summing (18, 28) the inner products $\alpha_i$;
   - outputting (19, 29) an estimate given by $m^2$, of the probability satisfying the error bounds.

2. A computer system (100) comprising at least one nontransitory processor-readable storage medium (110) that stores at least one of processor-executable instructions (115) or data (116) and at least one processor (120) communicably coupled to the at least one nontransitory processor-readable storage medium (110), wherein the at least one processor (120) is configured to perform the method of claim 1.

Fig. 1

**Fig. 2**

**Fig. 3a**

**Fig. 3b**

**14** Choose integer $s$ based on desired error bounds

$s$

**15** Choose $s$ binary vectors, $y_i$ each of length $d$, from product probability distribution $P$

$y_i$ | Equation ( 91 )

**16** For each $y_i$ construct the FLO state $|0\rangle^{\otimes n} |\tilde{y}_i, \vec{\theta}\rangle$

$|0\rangle^{\otimes n} |\tilde{y}_i, \vec{\theta}\rangle$

Equation ( 87 )

**11** Input

Equation ( 76 ) | $(U_k)_{k=1}^{d+1}, \vec{\phi}, \vec{a}, \vec{b}, \vec{n}$

**12** Gadgetization

Equation ( 84 ) | $(\tilde{V}_j)_{j=0}^k, (P_j)_{j=1}^k, \vec{\theta}$

**13** Apply gadgetized circuit to each initial FLO state, $|\psi_i\rangle :=$ $\tilde{V}_0 \prod_{j=1}^k \left( P_j \tilde{V}_j \right) |0\rangle^{\otimes n} |\tilde{y}_i, \theta\rangle$

Equation ( 94 ) | $|\psi_i\rangle$

**17** Compute $s$ inner products
$$\alpha_i = \langle 0|\psi_i\rangle$$

$\alpha_i$

**18** Sum the $\alpha_i$

$p = \left| \sum_i \alpha_i \right|^2$

**19** Output

**Fig. 4**

Fig. 5

$$\frac{1}{\sqrt{2}}\left(|00\rangle + e^{i\frac{\theta}{2}}|11\rangle\right) \Bigg\{$$

$$\frac{1}{\sqrt{2}}\left(|00\rangle + e^{i\frac{\theta}{2}}|11\rangle\right) \Bigg\{$$

$\Psi^+$

$\Psi^+$

**Fig. 6**

$|0\rangle$  $G(H,H)$

$|0\rangle$

$|\psi\rangle$

$|\phi\rangle$  $M_{-\theta}$  $\Bigg\} \frac{1}{4}C(\theta)|\psi\rangle|\phi\rangle$

$|0\rangle$  $G(H,H)$

$|0\rangle$

**Fig. 7**

Fig. 8

Europäisches
Patentamt

European
Patent Office

Office européen
des brevets

# EUROPEAN SEARCH REPORT

Application Number

EP 22 46 1637

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHIGEO HAKKAKU ET AL: "Quantifying fermionic nonlinearity of quantum circuits", ARXIV.ORG, CORNELL UNIVERSITY LIBRARY, 201 OLIN LIBRARY CORNELL UNIVERSITY ITHACA, NY 14853, 14 November 2022 (2022-11-14), XP091367081, DOI: 10.1103/PHYSREVRESEARCH.4.043100 * the whole document * ----- | 1,2 | INV. G06N10/80 |
| A | MARTIN HEBENSTREIT ET AL: "Computational power of matchgates with supplementary resources", ARXIV.ORG, CORNELL UNIVERSITY LIBRARY, 201 OLIN LIBRARY CORNELL UNIVERSITY ITHACA, NY 14853, 16 July 2020 (2020-07-16), XP081721735, * the whole document * ----- | 1,2 | |
| A | MICHAL OSZMANIEC ET AL: "Classical simulation of fermionic linear optics augmented with noisy ancillas", ARXIV.ORG, CORNELL UNIVERSITY LIBRARY, 201 OLIN LIBRARY CORNELL UNIVERSITY ITHACA, NY 14853, 6 June 2014 (2014-06-06), XP081389969, DOI: 10.1103/PHYSREVA.90.020302 * the whole document * ----- -/-- | 1,2 | TECHNICAL FIELDS SEARCHED (IPC) G06N |

The present search report has been drawn up for all claims

| Place of search | Date of completion of the search | Examiner |
|---|---|---|
| The Hague | 15 March 2023 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)

EP 4 379 616 A1

Application Number

EP 22 46 1637

**EUROPEAN SEARCH REPORT**

Europäisches Patentamt
European Patent Office
Office européen des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LESLIE G VALIANT: "Quantum computers that can be simulated classically in polynomial time", PROCEEDINGS OF THE 33RD. ANNUAL ACM SYMPOSIUM ON THEORY OF COMPUTING. HERSONISSOS, CRETE, GREECE, JULY 6 - 8, 2001; [PROCEEDINGS OF THE ANNUAL ACM SYMPOSIUM ON THEORY OF COMPUTING], NEW YORK, NY : ACM, US, 6 July 2001 (2001-07-06), pages 114-123, XP058310582, DOI: 10.1145/380752.380785 ISBN: 978-1-58113-349-3 * the whole document * | 1,2 | |
| A | BARBARA M TERHAL ET AL: "Classical simulation of noninteracting-fermion quantum circuits", ARXIV.ORG, CORNELL UNIVERSITY LIBRARY, 201 OLIN LIBRARY CORNELL UNIVERSITY ITHACA, NY 14853, 1 August 2001 (2001-08-01), XP080058473, DOI: 10.1103/PHYSREVA.65.032325 * the whole document * | 1,2 | |
| A | Knill E: "Fermionic Linear Optics and Matchgates Extended Abstract", , 8 August 2001 (2001-08-08), pages 1-17, XP093029893, Retrieved from the Internet: URL:https://arxiv.org/pdf/quant-ph/0108033.pdf [retrieved on 2023-03-08] * the whole document * | 1,2 | |

TECHNICAL FIELDS SEARCHED (IPC)

The present search report has been drawn up for all claims

| Place of search | Date of completion of the search | Examiner |
|---|---|---|
| The Hague | 15 March 2023 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

34

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10565514 B

**Non-patent literature cited in the description**

- **STEVEN T. FLAMMIA ; YI-KAI LIU.** Direct Fidelity Estimation from Few Pauli Measurements. *Phys. Rev. Lett.,* 2011, vol. 106 (23), 230501, https://link.aps.org/doi/10.1103/PhysRevLett.106.230501
- **FRANK ARUTE ; KUNAL ARYA ; RYAN BABBUSH ; DAVE BACON ; JOSEPH C. BARDIN ; RAMI BARENDS ; RUPAK BISWAS ; SERGIO BOIXO ; FERNANDO G. S. L. BRANDAO ; DAVID A. BUELL.** Quantum supremacy using a programmable superconducting processor. *Nature,* October 2019, vol. 574 (7779), ISSN 1476-4687, 505-510, https://doi.org/10.1038/s41586-019-1666-5
- **HAN-SEN ZHONG et al.** Quantum computational advantage using photons. *Science,* 2020, vol. 370 (6523), 1460-1463
- **S. BRAVYI ; D. BROWNE ; P. CALPIN ; E. CAMPBELL ; D GOSSET ; M. HOWARD.** Simulation of quantum circuits by low-rank stabilizer decompositions. *Quantum,* 2019, vol. 3
- **HAKOP PASHAYAN ; OLIVER REARDON-SMITH ; KAMIL KORZEKWA ; STEPHEN D. BARTLETT.** Fast Estimation of Outcome Probabilities for Quantum Circuits. *PRX Quantum,* 02 June 2022, vol. 3, 020361, https://link.aps.org/doi/10.1103/PRXQuantum.3.020361
- **JAMES R. SEDDON ; BARTOSZ REGULA ; HAKOP PASHAYAN ; YINGKAI OUYANG ; EARL T. CAMPBELL.** Quantifying Quantum Speedups: Improved Classical Simulation From Tighter Magic Monotones. *PRX Quantum,* 01 March 2021, vol. 2, 010345, https://link.aps.org/doi/10.1103/PRXQuantum.2.010345
- **BARBARA M. TERHAL ; DAVID P. DIVINCENZO.** Classical simulation of noninteracting-fermion quantum circuits. *Phys. Rev. A,* 03 March 2002, vol. 65, 032325, https://link.aps.org/doi/10.1103/PhysRevA.65.032325
- **SERGEY BRAVYI.** Lagrangian representation for fermionic linear optics. *Quantum Information & Computation,* May 2005, vol. 5 (3), 216-238
- **SERGEY BRAVYI ; DAVID GOSSET.** Complexity of Quantum Impurity Problems. *Communications in Mathematical Physics,* 2017, vol. 356, 451-500
- **MICHA 1 OSZMANIEC ; ZOLTAN ZIMBORAS.** Universal Extensions of Restricted Classes of Quantum Operations. *Phys. Rev. Lett.,* 22 November 2017, vol. 119, 220502, https://link.aps.org/doi/10.1103/PhysRevLett.119.220502
- **SHIGEO HAKKAKU ; YUICHIRO TASHIMA ; KOSUKE MITARAI ; WATARU MIZUKAMI ; KEISUKE FUJII.** *Quantifying Fermionic Nonlinearity of Quantum Circuits,* December 2021, https://arxiv.org/abs/2111.14599
- **MICHA 1 OSZMANIEC ; NINNAT DANGNIAM ; MAURO E.S. MORALES ; ZOLT'AN ZIMBOR'AS.** Fermion Sampling: A Robust Quantum Computational Advantage Scheme Using Fermionic Linear Optics and Magic Input States. *PRX Quantum,* 02 May 2022, vol. 3, 020328, https://link.aps.org/doi/10.1103/PRXQuantum.3.020328
- **M. HEBENSTREIT ; R. JOZSA ; B. KRAUS ; S. STRELCHUK ; M. YOGANATHAN.** All Pure Fermionic Non-Gaussian States Are Magic States for Matchgate Computations. *Phys. Rev. Lett.,* 08 August 2019, vol. 123, 080503, https://link.aps.org/doi/10.1103/PhysRevLett.123.080503
- **SERGEY BRAVYI.** Universal quantum computation with the v = 5/2 fractional quantum Hall state. *Phys. Rev. A,* 04 April 2006, vol. 73, 042313, https://link.aps.org/doi/10.1103/PhysRevA.73.042313
- **ALEXEI KITAEV.** Anyons in an exactly solved model and beyond. *Annals of Physics,* January 2006, vol. 321 (1), ISSN 0003-4916, 2-111, https://doi.org/10.1016/j.aop.2005.10.005
- **KOSUKE MITARAI ; KEISUKE FUJII.** Constructing a virtual two-qubit gate by sampling single-qubit operations. *New Journal of Physics,* February 2021, vol. 23 (2), 023021, https://doi.org/10.1088/1367-2630/abd7bc

- **DANIEL J. BROD ; ERNESTO F. GALV'AO.** Extending matchgates into universal quantum computation. *Phys. Rev. A,* 02 August 2011, vol. 84, 022310, https://link.aps.org/doi/10.1103/PhysRevA.84.022310